Europäisches Patentamt

European Patent Office

Office européen des brevets

(19)

(11) Veröffentlichungsnummer: **0 131 117**
**B1**

(12) **EUROPÄISCHE PATENTSCHRIFT**

(45) Veröffentlichungstag der Patentschrift:
12.08.87

(21) Anmeldenummer: **84105657.5**

(22) Anmeldetag: **18.05.84**

(51) Int. Cl.⁴: **B 60 C 15/02**

(54) Fahrzeugrad.

(30) Priorität: **11.07.83 DE 3324953**
**16.12.83 DE 3345537**

(43) Veröffentlichungstag der Anmeldung:
**16.01.85 Patentblatt 85/3**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
**FR-A-2 437 305**
**GB-A-2 030 087**

**KUNSTSTOFFTECHNIK, Band 10, Nr. 1, Januar 1971, Seiten 9-13, Band 10, Nr. 2, Februar 1971, Seiten 42-47 und Band 11, Nr. 1/2, Januar/Februar 1972, Seiten 23-30, Mainz, DE; F. FRANK u.a.: "Die Querschnittsform von Kreuzlagen- und Gürtelreifen"**

(73) Patentinhaber: **Continental Gummi- Werke Aktiengesellschaft, Königsworther Platz 1, D-3000 Hannover 1 (DE)**

(72) Erfinder: **Duchow, Alfred, Dipl.- Mathematiker, Berliner Strasse 6, D-3303 Vechelde (DE)**
Erfinder: **Hahn, Peter, Dipl.- Ing., Peinerstrasse 70, D-3000 Hannover 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein luftbereiftes Fahrzeugrad mit einer starren Felge und mit einem Fahrzeugluftreifen, der im wesentlichen aus Gummi oder gummiähnlichen Kunststoffen besteht, einen im Verhältnis zur Reifenseitenwand relativ biegesteifen Laufstreifen, insbesondere mit einer Gürteleinlage, und eine ein- oder mehrlagige Karkasse, insbesondere Radialkarkasse, aus metallischen und/oder textilen Festigkeitsträgern aufweist, die in den Reifenwülsten durch Umschlingen von Wulstkernen verankert ist, wobei der Reifen mit seinen Wülsten auf Felgensitzflächen neben den Felgenhörnern angeordnet ist und die Reifenseitenwand sich im Bereich der Felgenhörner flach nach seitlich außen erstreckt.

Ein solches Fahrzeugrad, bei dem die Wülste des Reifens radial innen am Felgenkranz angeordnet sind, wird z. B. in der DE-A- 31 45 252 beschrieben. Bei diesem bekannten Rad wird ein Gürtelreifen eingesetzt, wie er sonst auch bei üblichen Felgen verwendet wird, wo er auf der radial äußeren Seite der Felge angebracht wird.

Der Erfindung liegt die Aufgabe zugrunde, eine Karkaßneutralenoptimierung auf einem möglichst breiten Gebiet von Fahrzeugrädern vor allem im unteren Seitenwandbereich und im Wulstbereich anzugeben.

Diese Aufgabe wird erfindungsgemäß bei Fahrzeugrädern der eingangs genannten Art dadurch gelöst, daß der Verlauf der Karkaßneutralen zumindest im unteren Seitenwandbereich auf Felgenhornhöhe und seitlich außen vom Felgenhorn der Funktion einer Kettenlinie gehorcht, die sich durch die Beziehung

$$y = \lambda + a \cdot \cosh\left(\tfrac{x}{a} - b\right)$$

beschreiben läßt, wobei die x-Achse in der Rad- und Reifendrehachse und die y-Achse in der Mittelebene des Rades liegt, und b . a dem Abstand der y-Achse vom tiefsten Punkt der Kettenlinie, $\lambda + a$ dem Abstand der x-Achse vom tiefsten Punkt der Kettenlinie und a dem kleinsten Krümmungsradius an der tiefsten Stelle der Kettenlinie entspricht.

Die Erfindung ist nicht nur auf Fahrzeugräder mit einem Gürtelreifen mit Radialkarkasse anwendbar, sondern auch auf solche, bei denen der Reifen mit einer Winkelkarkasse versehen ist und einen Gürtel aufweisen kann oder auch nicht. Die Erfindung ist sowohl bei Fahrzeugrädern für PKW als auch bei solchen für LKW und andere Fahrzeuge anwendbar.

Es hat sich als entscheidend herausgestellt, daß die Karkaßneutrale im unteren Seitenwandbereich auf Felgenhornhöhe und seitlich außen vom Felgenhorn der Funktion einer Kettenlinie gehorcht, während die Karkaßneutrale im Wulstbereich den Bedürfnissen im Einzelfall angepaßt seln kann. Die Erfindung ist sogar bei Fahrzeugrädern anwendbar, bei denen der Reifen radial außen an der Felge befestigt ist und bei denen die Reifenwände sich im Bereich der Felgenhörner extrem flach nach seitlich außen erstrecken.

Mit der Erfindung wird eine Verbesserung mehrerer Reifeneigenschaften erzielt. So werden vor allem die Fahrstabllität und die Haltbarkeit des Reifens im Wulstbereich verbessert. Durch den kettenlinienförmigen Verlauf der Karkaßneutralen im unteren Seitenwandbereich wird bei Rotation dieser Kurve um die Drehachse des Rades (x-Achse) eine Fläche mit kleinstmöglichem Flächeninhalt erzeugt, die gleichzeitlg ein Energieminimum darstellt; d.h. bei jeglicher Auslenkung aus dieser Gleichgewichtslage im Fahrbetrieb wird der Reifen nach Beendigung der Störung von allein in die Gleichgewichtslage zurückgebracht. Weiterhin gewährleistet der kettenlinienförmige Verlauf der Karkaßneutralen einen sicheren Sitz des Reifens auf der Felge, und bei der Herstellung des Reifens ergibt sich eine Materialeinsparung gegenüber bekannten Reifen, bei denen die genannte Rotationsfläche nicht minimal gewählt ist.

Nachfolgend werden mehrere Ausführungsbeispiele der Erfindung anhand einer Zichnung näher erläutert.

Es zeigt

Fig. 1 ein Rad mit einem Gürtelreifen mit einer einlagigen Radialkarkasse in einem radialen Teilschnitt,

Fig. 2 das Rad gemäß Fig. 1 mit einer eingezeichneten Karkaßneutralen in einem x, y-Reifenkoordinatensystem,

Fig. 3 ein kettenlinienförmiges Teilstück der Karkaßneutralen in zwei Koordinatensystemen,

> Fig. 4 ein Rad mit einem Reifen mit einer Winkelkarkasse und ohne Gürtel in einem radialen Teilschnitt (rechte Hälfte mit eingezeichneter Karkaßneutralen),

Fig. 5 ein Rad, bei dem sich zwischen Felge und Reifen ein Abstandsprofil befindet, in einem radialen Teilschnitt,

Fig. 6 ein Rad, bei dem der Reifen radial außen am Felgenkranz befestigt ist, in einem radialen Teilschnitt,

Fig. 7 eine Kurvenschar, von der die Kurve $s_k$ die Karkaßneutrale im Wulstbereich des Reifens nach Fig. 6 darstellt.

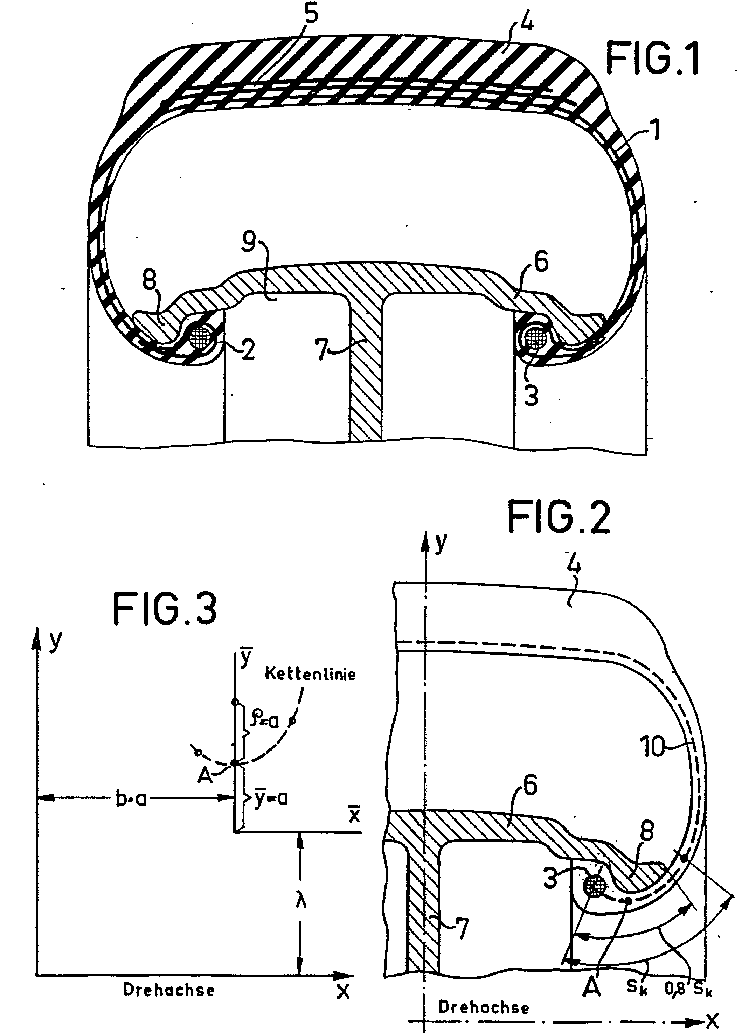

Der beim Rad gemäß Fig. 1 verwendete Fahrzeugluftreifen, der im wesentlichen aus Gummi oder gummiähnlichen Stoffen besteht, weist eine einlagige Radialkarkasse 1 auf, die aus in Cordlage angeordneten Textilfäden besteht, jedoch auch aus Stahldrähten aufgebaut sein kann. Bei Bedarf kann die Karkasse 1 selbstverständlich auch mehrlagig ausgebildet sein. Die Karkasse 1 ist mit ihren Enden in den Wülsten 2 durch Umschlingen der zugfesten Wulstkerne 3 verankert. Unterhalb des Laufstreifens 4 zwischen diesem und der Karkasse 1 befindet sich ein in Umfangsrichtung zugfester Gürtel 5 aus zwei oder mehreren Cordgewebelagen, der die Seitenstabilisierung des Reifenkörpers bewirkt.

Der Gürtelreifen ist mit seinen Wülsten 2 auf der radial inneren Seite des Felgenkranzes 6 montiert, der in üblicher Weise von einer Felgenschüssel 7 gehalten wird. Dabei befinden sich Wulstsitzflächen des Reifens auf Felgensitzflächen, die neben radial nach innen und axial nach außen sich erstreckenden Felgenhörnern 8 liegen und denen sich nach axial innen Vertiefungen 9 anschließen, die der Reifenmontage dienen.

Bei der Herstellung des Reifens ist die Karkasse 1 derart im Reifen anzuordnen, daß der Karkaßneutralenverlauf zumindest im unteren Seitenwandbereich auf Felgenhornhöhe und seitlich außen vom Felgenhorn der Funktion einer Kettenlinie gehorcht. Beim Reifen der Fig. 1 folgt die Karkaßneutrale darüberhinaus auch im Wulstbereich der gleichen Kettenlinie, die etwa im Kernquerschnittsmittelpunkt endet. In Fig. 2 ist beim Reifen gemäß Fig. 1 die Karkaßneutrale 10 dargestellt, wobei gleichzeitig ein x, y-Koordinatensystem eingezeichnet wurde, bei dem die x-Achse in der Rad- und Reifendrehachse und die y-Achse in der Mittelebene des Rades liegt. Der kettenlinienförmige Verlauf $s_k$ der Karkaßneutralen 10, der in jedem Fall unterhalb der größten Reifenbreite endet, läßt sich durch die Funktion

$$y = \lambda + a \cosh\left(\tfrac{x}{a} - b\right)$$

beschreiben.

$b \cdot a$ = Abstand von der y-Achse zum tiefsten Punkt A der Kettenlinie

$\lambda + a$ = Abstand von der x-Achse zum tiefsten Punkt A der Kettenlinie.

Die Kettenlinie s endet auf der einen Seite im Innern des Wulstkerns 3 und auf der anderen Seite im unteren Seitenwandbereich des Reifens. Der sich anschließende Teil der Karkaßneutralen 10 läßt sich mit Hilfe der Membrantheorie formelmäßig beschreiben. Der Übergang der beiden Kurvenformen zeichnet sich dadurch aus, daß dort die Krümmungsradien und die Steigungen beider Kurven identisch sind.

Der kettenlinienförmige Karkaßneutralenverlauf wird in der Nachbarschaft der Wulstkerne 3 durch die Form und Erstreckung der Felgenhörner 8 zwangsgeführt. Es hat sich gezeigt, daß diese an sich günstige Zwangsführung sich nicht über mehr als 80 % der gesamtlänge des kettenlinienförmigen Karkaßneutralenverlaufs $s_k$ erstrecken sollte.

In Fig. 3 ist der kettenlinienförmige Karkaßneutralenverlauf gemäß Fig. 2 im Rahmen einer Koordinatentransformation mit $y = \bar{y} + \lambda$, $x = \bar{x} + b \cdot a$ dargestellt, so daß sich im $\bar{x}, \bar{y}$-System die allgemein bekannte Gleichung für eine Kettenlinie

$$\bar{y} = a \cosh\left(\tfrac{\bar{x}}{a}\right)$$

ergibt.

Für den Krümmungsradius $\zeta$ dieser Kurve gilt:

$$\zeta = a \cosh^2\left(\tfrac{\bar{x}}{a}\right)$$

Daraus folgt für den kleinsten Krümmungsradius $\zeta$ an der tiefsten Stelle der Kurve ($\bar{x} = 0$):

$$\zeta = a$$

Bei üblichen PKW-Reifengrößen sollte a in einem Bereich von 10 bis 40 mm liegen, wobei 15 bis 30 mm bevorzugt werden.

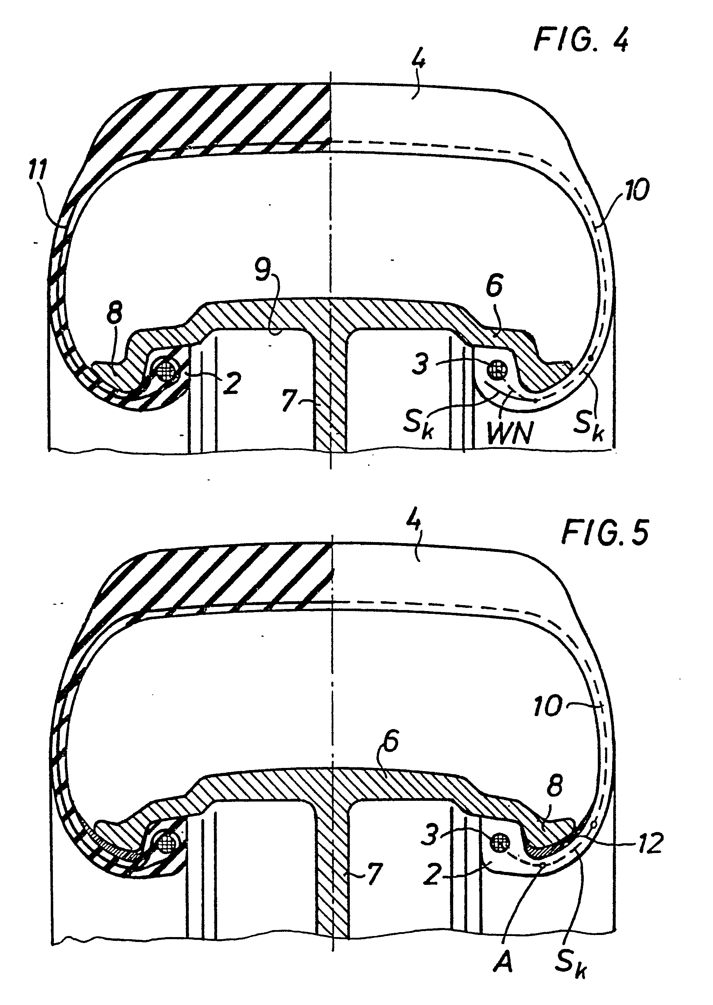

Beim Fahrzeugrad nach Fig. 4 ist der Reifen mit einer Winkelkarkasse 11 versehen und er weist keinen Gürtel auf. Die übrigen Teile des Fahrzeugrades entsprechen bis auf die Auslegung der Karkaßneutralen 10 im Wulstbereich dem Rad der Fig. 1. Während beim Fahrzeugrad der Fig. 4 die Karkaßneutrale 10 im unteren Seitenwandbereich auf Felgenhornhöhe und seitlich außen vom Felgenhorn 8 der Funktion einer Kettenlinie (Kurve $s_k$) gehorcht und im weiteren Seitenwandbereich durch die Membrantheorie beschreibbar ist (Der Übergang zwischen beiden Kurven ist wie beim Rad der Fig. 1 definiert), wurde die Karkaßneutrale 10 im Wulstbereich, d. h. axial innen von der Felgenhornhöhe empirisch ermittelt (Abschnitt WN) und ausgelegt. Zum Vergleich ist in Fig. 4 die Kurve der Kettenlinie $s_k$ nach axial innen hin weitergezeichnet, und man erkennt, daß sie außerhalb der Querschnittsfläche des Wulstkerns 3 vorbeiführt, wobei sie sie im Grenzfall tangential berühren kann.

In Fig. 5 ist ein Fahrzeugrad dargestellt, bei dem die Karkaßneutrale 10 des Reifens sowohl im unteren Seitenwandbereich als auch im Wulstbereich der Funktion einer Kettenlinie gehorcht, wobei ein recht großer Abschnitt des fallenden Astes der Kettenlinie $s_k$ im Wulstbereich verwendet wurde und der tiefste Punkt A sich etwa unterhalb vom Felgenhorn 8 befindet. Damit bei dieser Konstruktion mit der starken Wölbung der Kettenlinie $s_k$ die Felgenhörner 8 und die Reifenwülste 2 und Seitenwände in üblicher Weise ausgelegt sein können, befindet sich zwischen der Reifenwand und dem Felgenhorn 8 ein Abstandsprofil 12 aus einem genügend harten Gummi, das auf das Felgenhorn 8 geklebt oder in sonstiger Weise an ihm befestigt sein kann. Das Abstandsprofil 12 kann gleichzeitig zur Zwangsführung des Reifens seitlich vom Felgenhorn 8 dienen. Der Reifen kann eine Radial- oder Winkelkarkasse aufweisen.

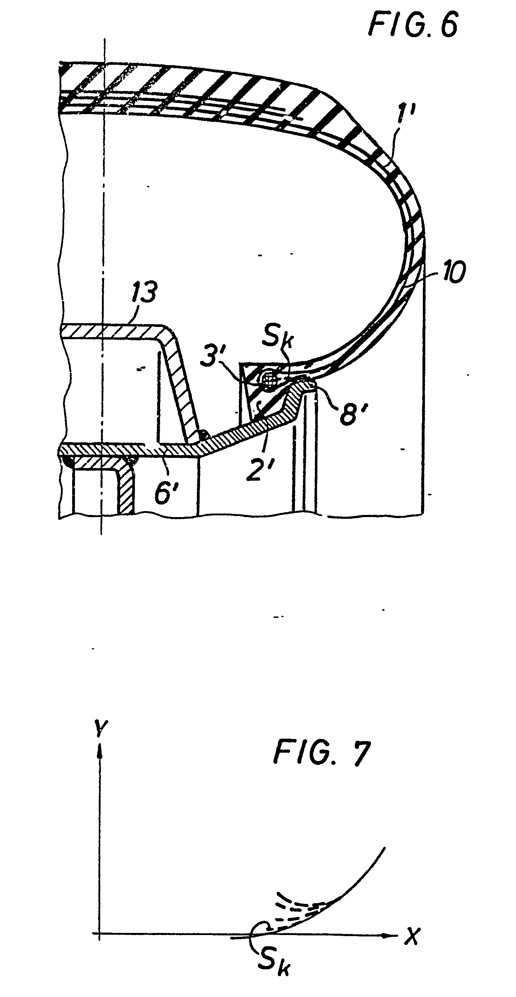

Beim Fahrzeugrad gemäß Fig. 6 ist ein Reifen mit einer Radialkarkasse 1', die in den Wülsten 2' durch Umschlingen von Wulstkernen 3' verankert ist, radial außen auf einer Felge 6' neben Felgenhörnern 8' befestigt. Ein Stützteil 13 dient zum Abstützen des Reifens bei Druckverlust infolge einer Panne. Auch in diesem Beispiel gehorcht die Karkaßneutrale 10 im unteren Seitenwandbereich und im Wulstbereich der Funktion einer Kettenlinie, so daß das Fahrzeugrad die damit erzielbaren Vorteile aufweist. Um den kettenlinienförmigen Verlauf besser zu verdeutlichen, ist in Fig. 7 eine Kurvenschar dargestellt, von der die untere Kurve einem Verlauf gemäß Membrantheorie entspricht, während die weiteren Kurven (gestrichelt) Kettenlinien mit unterschiedlichen Parametern darstellen. Es ist ohne weiteres ersichtlich, daß der Reifen gemäß Fig. 6 eine Karkaßneutrale gemäß der Kettenlinie $s_k$ (Fig. 7) aufweist.

Zusammenfassend ist hervorzuheben, daß es bei allen beschriebenen Reifen wichtig ist, daß die Karkaßneutrale 10 im unteren Seitenwandbereich, wo im Fahrbetrieb noch gewisse Bewegungen stattfinden, kettenlinienförmig ausgebildet ist, während dies im Wulstbereich ebenfalls sein kann, aber nicht muß.

Somit sind bei Bedarf auch abweichend von den dargestellten Beispielen andere Kombinationen von einzelnen Elementen möglich. So kann z. B. der Reifen gemäß Fig. 4 auch mit einer Radialkarkasse versehen sein wie auch beim Beispiel gemäß Fig. 6 eine Winkelkarkasse verwendbar ist.

**Patentansprüche**

1. Luftbereiftes Fahrzeugrad mit einer starren Felge (6, 7; 6') und mit einem Fahrzeugluftreifen, der im wesentlichen aus Gummi oder gummiähnlichen Kunststoffen besteht, einen im Verhältnis zur Reifenseitenwand relativ biegesteifen Laufstreifen (4), insbesondere mit einer Gürteleinlage (5), und eine ein- oder mehrlagige Karkasse (1, 1'), insbesondere Radialkarkasse, aus metallischen und/oder textilen Festigkeitsträgern aufweist, die in den Reifenwülsten (2, 2') durch Umschlingen von Wulstkernen (3, 3') verankert ist, wobei der Reifen mit seinen Wülsten (2, 2') auf Felgensitzflächen neben den Felgenhörnern (8, 8') angeordnet ist und die Reifenseitenwand sich im Bereich der Felgenhörner flach nach seitlich außen erstreckt, dadurch gekennzeichnet, daß der Verlauf der Karkaßneutralen (10) zumindest im unteren Seitenwandbereich auf Felgenhornhöhe und seitlich außen vom Felgenhorn (8, 8') der Funktion einer Kettenlinie ($s_k$) gehorcht, die sich durch die Beziehung

$$y = \lambda + a \cdot \cosh(\tfrac{x}{a} - b)$$

beschreiben läßt, wobei die x-Achse in der Rad- und Reifendrehachse und die y-Achse in der Mittelebene des Rades liegt, und b . a dem Abstand der y-Achse vom tiefsten Punkt (A) der Kettenlinie ($s_k$), $\lambda$ + a dem Abstand der x-Achse vom tiefsten Punkt (A) der Kettenlinie und a dem kleinsten Krümmungsradius ($\zeta$) an der tiefsten

Stelle der Kettenlinie ($s_k$) entspricht.

2. Fahrzeugrad nach Anspruch 1, dadurch gekennzeichnet, daß der Reifen mit seinen Wülsten (2) auf Felgensitzflächen angeordnet ist, die sich am radial inneren Umfang des Felgenkranzes (6) neben sich überwiegend nach radial innen erstreckenden Felgenhörnern (8) befinden.

3. Fahrzeugrad nach Anspruch 1 oder 2, dadurch gekennzeichnet, daß die Karkaßneutrale (10) auch im Bereich der Reifenwülste (2) der Funktion der Kettenlinie gehorcht und daß die Kettenlinie ($s_k$) innerhalb der Kernquerschnittsfläche endet.

4. Fahrzeugrad nach Anspruch 2 oder 3, dadurch gekennzeichnet, daß sich zwischen der Reifenwand und dem Felgenhorn (8) ein Abstandsprofil (12) befindet.

5. Fahrzeugrad nach Anspruch 1, dadurch gekennzeichnet, daß die Karkaßneutrale (10) im Wulstbereich empirisch ermittelt worden ist und daß eine Verlängerung der Kettenlinie ($s_k$) in Richtung auf den Wulstkern (3) hin außerhalb von der Kernquerschnittsfläche verläuft.

6. Fahrzeugrad nach Anspruch 1, dadurch gekennzeichnet, daß der Reifen mit seinen Wülsten (2') auf Felgensitzflachen angeordnet ist, die sich am radial äußeren Umfang des Felgenkranzes (6') neben sich überwiegend nach radial außen erstreckenden Felgenhörnern (8') befinden.

7. Fahrzeugrad nach Anspruch 1, 2 oder 3, dadurch gekennzeichnet, daß die Karraßneutrale (10), die durch den Mittelpunkt der Wulstkerne (3, 3') führt, im unteren Seitenwandbereich von einer Kurvenform abgelöst wird, die der Membrantheorie folgt und daß am Übergang von dieser Kurvenform zum kettenlinienförmigen Verlauf die Krummungsradien und die Steigungen beider Kurven identisch sind.

8. Fahrzeugrad nach Anspruch 3, dadurch gekennzeichnet, daß der kettenlinienförmige Verlauf der Karkaßneutralen (10) über maximal 80 % der Kurvenlänge ($s_k$) durch die Felge zwangsgeführt wird.

9. Fahrzeugrad nach Anspruch 1 oder 3, dadurch gekennzeichnet, daß in der Gleichung $\bar{y} = a \cosh(\tfrac{x}{a})$, die den kettenlinienförmigen Verlauf ($s_k$) der Karkaßneutralen (10) beschreibt, a in einem Bereich von 10 bis 40 mm liegt.

**Claims**

1. Vehicle wheel fitted with a pneumatic tyre, comprising a rigid rim (6, 7; 6') and a pneumatic vehicle tyre which is formed substantially from rubber or rubber-like plastics materials and has a tread strip (4), which is relatively resistant to bending in relation to the lateral tyre wall and is provided more especially with a belt insert ply (5), and a single- or multiple-ply carcase (1, 1'), more especially a radial carcase, which is formed from metallic and/or textile reinforcing members and is secured in the tyre beads (2, 2') by being looped around bead cores (3, 3'), the tyre being disposed with its beads (2, 2') on rim seating surfaces adjacent to the rim flanges (8, 8'), and the lateral tyre wall extends in a flat manner laterally and outwardly in the region of the rim flanges, characterised in that the path of the neutral line (10) of the carcase, at least in the lower lateral wall region at rim flange level and laterally externally of the rim flange (8, 8'), conforms to the function of a catenary curve ($s_k$) which can be described by the equation

$$y = \lambda + a \cdot \cosh \left(\tfrac{x}{a} - b\right)$$

wherein the x-axis lies in the axis of rotation of the wheel and tyre, and the y-axis lies in the central plane of the wheel, and $b$ . $a$ corresponds to the distance between the y-axis and the lowermost point (A) of the catenary curve ($s_k$), $\lambda$ + $a$ corresponds to the distance between the x-axis and the lowermost point (A) of the catenary curve, and a corresponds to the smallest radius of curvature ($\zeta$) at the lowermost point of the catenary curve ($s_k$).

2. Vehicle wheel according to claim 1, characterised in that the tyre is disposed with its beads (2) on rim seating surfaces which are disposed on the radially inner circumference of the rim ring (6) adjacent to rim flanges (8) which mainly extend radially inwardly.

3. Vehicle wheel according to claim 1 or 2, characterised in that the neutral line (10) of the carcase also conforms to the function of the catenary curve in the region of the tyre beads (2), and in that the catenary curve ($s_k$) terminates within the cross-sectional area of the core.

4. Vehicle wheel according to claim 2 or 3, characterised in that a profiled spacer member (12) is disposed between the tyre wall and the rim flange (8).

5. Vehicle wheel according to claim 1, characterised in that the neutral line (10) of the carcase has been empirically determined in the bead region, and in that an extension of the catenary curve ($s_k$) extends towards the bead core (3) externally of the cross-sectional area of the core.

6. Vehicle wheel according to claim 1, characterised in that the tyre is disposed with its beads (2') on rim seating surfaces which are disposed on the radially outer circumference of the rim ring (6') adjacent to rim flanges (8') which mainly extend radially outwardly.

7. Vehicle wheel according to claim 1, 2 or 3, characterised in that the neutral line (10) of the carcase, which extends through the centre-point of the bead cores (3, 3'), is commuted in the lower lateral wall region from a curved form which obeys the diaphragm theory, and in that the radii of curvature and the inclines of both curves are identical at the transition region between this curved form and the catenary-curved path.

8. Vehicle wheel according to claim 3, characterised in that the catenary-curved path of the neutral line (10) of the carcase positively extends through the rim over a maximum of 80 % of the curve length ($s_k$).

9. Vehicle wheel according to claim 1 or 3, characterised in that, in the equation $\bar{y}$ = a cosh ( $\tfrac{x}{a}$), which describes the catenary-curved path ($s_k$) of the neutral line (10) of the carcase, $a$ lies within a range of between 10 mm and 40 mm.

## Revendications

1. Roue de véhicule comportant une jante rigide (6, 7; 6') et un pneumatique, qui est constitué essentiellement par du caoutchouc ou par des matières plastiques analogues au caoutchouc, et possède une bande de roulement (4) relativement résistante à la flexion par rapport à la paroi latérale du pneumatique, et comportant notamment un insert en forme de ceinture (5) et une carcasse (1, 1') à une ou plusieurs couches, notamment une carcasse radiale, constituée par des éléments métalliques et/ou textiles augmentant la rigidité, et qui est ancrée dans les talons (2, 2') du pneumatique par le fait que l'enveloppe des tringles (3, 3') et dans laquelle le pneumatique est disposé, par ses talons (2, 2'), sur des surfaces d'appui de la jante à côté des rebords de jante (8, 8'), et la paroi latérale du pneumatique s'étend latéralement à plat vers l'extérieur dans la zone des rebords de jante, caractérisée en ce que le lieu de la ligne neutre (10) de la carcasse correspond, au moins dans la zone inférieure de la paroi latérale au niveau des rebords de jante (8, 8') et latéralement vers l'extérieur à partir de ces derniers, à la fonction d'une chaînette ($s_k$), qui peut être exprimée par la relation

$$y = \lambda + a \cdot \cosh \left(\tfrac{x}{a} - b\right)$$

dans laquelle l'axe x coïncide avec l'axe de rotation de la roue du pneumatique et l'axe y est situé dans le plan médian de la roue, b . a représente la distance entre l'axe y et le point le plus bas (A) de la chaînette ($s_k$), $\lambda$ + a représente la distance entre l'axe x et le point le plus bas (A) de la chaînette et a représente le plus petit rayon de courbure ($\zeta$) au niveau du point le plus bas de la chaînette ($s_k$).

2. Roue de véhicule selon la revendication 1, caractérisée en ce que le pneumatique est disposé, par ses talons (2) sur des surfaces d'appui de la jante, qui sont situées sur le pourtour, intérieur du point de vue radial, de la couronne (6) de la jante, à côté de rebords de jante (8) qui s'étendent essentiellement vers l'intérieur du point de vue radial.

3. Roue de véhicule selon la revendication 1 ou 2, caractérisée en ce que la ligne neutre (10) de la carcasse suit également, au voisinage des talons (2) du pneumatique, la fonction de la chaînette et que la chaînette (s) se termine à l'intérieur de la surface en coupe transversale de la tringle.

4. Roue de véhicule selon la revendication 2 ou 3, caractérisée en ce qu'un profilé-entretoise (12) est situé entre la paroi du pneumatique et le rebord de jante (8).

5. Véhicule selon la revendication 1, caractérisé en ce que la ligne neutre (10) de la carcasse a été déterminée de façon empirique dans la zone du talon et qu'un prolongement de la chaînette ($s_k$) en direction de la tringle (3) se situe à l'extérieur de la surface en coupe transversale de la tringle.

6. Roue de véhicule selon la revendication 1, caractérisée en ce que le pneumatique est disposé, par ses talons (2'), sur des surfaces d'appui de la jante, qui sont situées sur le pourtour, extérieur du point de vue radial, de la couronne (6') de la jante, à côté de rebords de jante (8') s'étendant essentiellement vers l'extérieur du point de vue radial.

7. Roue de véhicule selon la revendication 1, 2 ou 3, caractérisée en ce que la ligne neutre (10) de la carcasse, qui aboutit au centre des tringles (3, 3'), s'écarte, dans la zone inférieure de la paroi latérale, d'une forme courbe qui correspond à la théorie des membranes, et que les rayons de courbure et les pentes des deux courbes sont identiques au niveau du point de jonction entre cette forme courbe et la courbe en forme de chaînette,

8. Roue de véhicule selon la revendication 3, caractérisée en ce que le lieu en forme de chaînette de la ligne neutre (10) de la carcasse est guidé à force sur au maximum 80 % de la longueur de la courbe ($s_k$) par la jante.

9. Roue de véhicule selon la revendication 1 ou 3, caractérisée en ce que dans la relation $\bar{y} = a \cosh(\frac{\breve{x}}{a})$, qui décrit l'allure en forme de chaînette ($s_k$) de la ligne neutre (10) de la carcasse, a se situe dans une plage de valeurs allant de 10 à 40 mm.

FIG.1

FIG.2

FIG.3

Kettenlinie

$\bar{y}$

$\varrho = a$

$A$

$\bar{y} = a$

$\bar{x}$

$b \cdot a$

$\lambda$

Drehachse

Drehachse

$S_k$  0,8 $S_k$

0 131 117

FIG. 4

FIG. 5

FIG. 6

13

$S_k$

3'

1'

10

8'

2'

6'

Y

FIG. 7

$S_k$

X